# EUROPÄISCHE PATENTANMELDUNG

(11) **EP 3 534 018 A1**
(43) Veröffentlichungstag der Anmeldung: **04.09.2019**
(21) Anmeldenummer: 18159053.0
(22) Anmeldetag: 28.02.2018
(51) Int. Cl.: F16B 13/06

(54) **SPREIZANKER MIT RÜCKWÄRTS EXPANDIERENDER ANKERHÜLSE**

(71) Anmelder: HILTI Aktiengesellschaft, 9494 Schaan (LI)
(72) Erfinder: Haeussler, Karl, 7222 Lunden (CH); Shimahara, Hideki, 9472 Grabs (CH); Frensemeier, Mareike, 9470 Buchs (CH); Li, Yijun, 9470 Buchs (CH); Yan, Wentao, 9470 Buchs SG (CH); Guevara Arriola, Arturo, 9470 Buchs (CH)
(74) Vertreter: Hilti Aktiengesellschaft Corporate Intellectual Property

(57) **Zusammenfassung**

Die Erfindung betrifft einen Spreizanker mit einem Ankerbolzen und einer Spreizhülse, welche den Ankerbolzen umgibt, wobei der Ankerbolzen einen nach hinten hin konvergierenden Spreizbereich für die Spreizhülse aufweist. Erfindungsgemäss ist zumindest eine Ankerhülse, welche den Ankerbolzen umgibt, vorgesehen, wobei der Ankerbolzen einen Ankerhülsenmitnehmer aufweist, der die Ankerhülse, insbesondere zum Verankern der Ankerhülse an einer Bohrlochwand, nach hinten hin mitnehmen kann.

## Beschreibung

Die Erfindung betrifft einen Spreizanker gemäss dem Oberbegriff des Anspruchs 1. Ein solcher Spreizanker ist ausgestattet mit einem Ankerbolzen und einer Spreizhülse, welche den Ankerbolzen umgibt, wobei der Ankerbolzen einen nach hinten hin konvergierenden Spreizbereich für die Spreizhülse aufweist.

Die EP0267148 A1 zeigt einen Spreizanker mit zwei hintereinander angeordneter Spreizhülsen. Vor jeder dieser Spreizhülsen ist ein Spreizkonus angeordnet. Bei der Montage werden die beiden Spreizhülsen an ihrem jeweils vorderen Ende radial aufgeweitet.

Die EP0953777 A2 zeigt einen selbsthinterschneidenden Spreizanker, der mit rotierender Spreizhülse eingetrieben wird, wobei die Spreizlappen der Spreizhülse selbsttätig eine Hinterschneidung erzeugen.

Aufgabe der Erfindung ist es, einen Spreizanker anzugeben, der bei geringem Herstellungsaufwand und geringem Montageaufwand besonders leistungsfähig ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker zeichnet sich durch zumindest eine Ankerhülse aus, welche den Ankerbolzen umgibt, wobei der Ankerbolzen einen Ankerhülsenmitnehmer aufweist, der die Ankerhülse, insbesondere zum Verankern der Ankerhülse an einer Bohrlochwand, nach hinten hin mitnehmen kann.

Ein Grundgedanke der Erfindung kann darin gesehen werden, den Spreizanker mit zwei expandierenden Hülsen - der Spreizhülse und der Ankerhülse - auszustatten, die bei Belastung, insbesondere bei nach hinten gerichteten Zugkräften im Ankerbolzen, mit entgegengesetzten Öffnungsrichtungen an entgegengesetzten Endbereichen expandieren: Die Spreizhülse öffnet sich am Spreizbereich nach vorne hin, wenn der nach hinten hin konvergierende Spreizbereich nach hinten in die Spreizhülse eingezogen wird, wohingegen sich die Ankerhülse nach hinten hin öffnet, wenn sie vom Ankerhülsenmitnehmer des Ankerbolzens nach hinten hin mitgenommen wird. Die zusätzliche Ankerhülse öffnet sich also in Auszugsrichtung und kann dabei vorzugsweise eine Art Widerhaken bilden. Hierdurch kann bei geringem Herstellungsaufwand eine besonders gute Verankerung erhalten werden, wobei der Montagevorgang im Wesentlichen dem einfachen Montagevorgang eines Spreizankers mit einer einzigen Hülse entsprechen kann.

Insbesondere kann die radial nach aussen expandierende rückwärtige Kante der Ankerhülse einen Hinterschnitt in der umgebenden Bohrlochwand bilden. Die rückwärtige Kante der Ankerhülse wird durch Auszugskräfte im Ankerbolzen in die Bohrlochwand getrieben und kann eine Hinterschnittverbindung bilden, die umso grösser wird, je höher die Auszugskräfte sind.

Die Spreizhülse bildet vorzugsweise einen offenen Ring, also eine C-Form, in dem beziehungsweise in der der Ankerbolzen aufgenommen ist. Alternativ oder zusätzlich kann die Ankerhülse einen offenen Ring, also eine C-Form, bilden, in dem beziehungsweise in der der Ankerbolzen aufgenommen ist. Beides kann eine besonders einfache Herstellung durch Aufwickeln von Bändern um den Ankerbolzen ermöglichen. Vorzugsweise sind die Spreizhülse und der Ankerbolzen koaxial angeordnet und/oder sind die Ankerhülse und der Ankerbolzen koaxial angeordnet. Die Ankerhülse ist ein Teil des erfindungsgemässen Spreizankers.

Der Spreizbereich des Ankerbolzens konvergiert nach hinten hin, was insbesondere beinhalten soll, dass sich im Spreizbereich die Oberfläche des Ankerbolzens nach hinten hin an die Längsachse des Ankerbolzens annähert, insbesondere kontinuierlich annähert. Der Spreizbereich des Ankerbolzens kann die Spreizhülse radial aufweiten, wenn der Spreizbereich relativ zur Spreizhülse axial nach hinten versetzt wird. Insbesondere dient der Spreizbereich zum radialen Verdrängen der Spreizhülse beim axialen Versetzen des Spreizbereichs relativ zur Spreizhülse nach hinten. Insbesondere kann der Spreizbereich eine Konusform bilden.

Soweit hier von der Axialrichtung, der Umfangsrichtung und der Radialrichtung die Rede ist, soll sich dies insbesondere auf die Längsachse des Ankerbolzens beziehen, welche insbesondere mit der Längsachse des Spreizankers zusammenfallen kann. Die Längsachse des Ankerbolzens verläuft insbesondere in Montagerichtung, also in der Richtung, in welche der Ankerbolzen bei bestimmungsgemässer Montage in ein Bohrloch eingeschoben wird und/oder in Auszugsrichtung, also in der Richtung, in welcher der Ankerbolzen nach der Montage bestimmungsgemäss belastet wird. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen, der Spreizhülse und der Ankerhülse verwendet werden. Insbesondere sollen sich die Richtungsangaben auf die Axialrichtung beziehen.

Der Ankerhülsenmitnehmer greift so an der Ankerhülse an, dass die Ankerhülse zusammen mit dem Ankerbolzen nach hinten versetzt werden kann.

Der Ankerbolzen kann auch mehrteilig ausgeführt sein und beispielsweise eine Ankerstange und ein mit der Ankerstange verschraubtes Vorderteil aufweisen, an dem der Spreizbereich und der Ankerhülsenmitnehmer angeordnet sind. Besonders bevorzugt ist es aber, dass der Ankerbolzen einstückig ausgebildet ist. Vorzugsweise bestehen die Spreizhülse, die Ankerhülse und/oder der Ankerbolzen zumindest bereichsweise aus einem Metallmaterial. Insbesondere sind der Spreizbereich und der Ankerhülsenmitnehmer zugfest am Ankerbolzen angeordnet, so dass über diese Elemente nach hinten gerichtete Zugkräfte übertragen werden können.

In einem rückwärtigen Bereich des Ankerbolzens kann der Ankerbolzen eine Lastangriffsstruktur aufweisen. Die Lastangriffsstruktur dient zum Einleiten von in Auszugsrichtung gerichteten Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Soweit nicht anders angegeben sollen die hier beschriebenen Merkmale vorzugsweise für einen nicht-montierten Spreizanker, also einen Spreizanker vor der Montage, gelten, und/oder für einen Zustand, in dem die Spreizhülse die Ankerhülse noch nicht radial versetzt hat, und besonders bevorzugt für einen Zustand, in dem die Spreizhülse von der Ankerhülse axial beabstandet ist.

Besonders bevorzugt ist es, dass die Ankerhülse zumindest bereichsweise, vorzugsweise vollständig, vor der Spreizhülse angeordnet ist. Dies kann einerseits eine besonders tiefe Lasteinleitung an der relativ fest verankernden Ankerhülse in das umgebende Substrat ermöglichen, was im Hinblick auf die Lastwerte vorteilhaft sein kann. Darüber hinaus kann in dieser Ausgestaltung, wie nachfolgend im Detail erläutert wird, die Spreizhülse in konstruktiv besonders einfacher Weise zum Unterstützen der Expansion der Ankerhülse dienen, was den Verankerungsmechanismus noch weiter verbessern kann.

Ein nach hinten gerichtetes Öffnen und eine Verankerung der Ankerhülse können bereits durch vom Ankerhülsenmitnehmer auf die Ankerhülse aufgebrachte nach hinten gerichtete Kräfte bei Zug im Ankerbolzen bewirkt werden. Besonders bevorzugt ist es allerdings, dass die Spreizhülse die Ankerhülse, insbesondere am hinteren Endbereich der Ankerhülse, radial nach aussen drängen kann, insbesondere wenn diese beiden Hülsen axial gegeneinander laufen. Dies kann zweckmässigerweise beinhalten, dass die Ankerhülse auf einer Trajektorie, insbesondere auf einer vorwärts gerichteten Trajektorie, der Spreizhülse liegt, so dass die Spreizhülse axial von hinten gegen die Ankerhülse wirken kann, wenn der Ankerbolzen zusammen mit der vom Ankerhülsenmitnehmer mitgenommenen Ankerhülse relativ zur Spreizhülse nach hinten versetzt wird. Insbesondere kann also die Ankerhülse bei einer nach hinten hin gerichteten Bewegung des Ankerbolzens axial zwischen der Spreizhülse und dem Ankerhülsenmitnehmer eingezwängt werden, mit der Folge, dass die Ankerhülse radial nach aussen ausweicht und expandiert, insbesondere am hinteren Ende der Ankerhülse, und sich hierbei insbesondere nach hinten hin öffnet. Demgemäss kann die Spreizhülse eine Doppelfunktion innehaben, nämlich einerseits das unmittelbare Fixieren des Spreizankers im Bohrloch durch Expansion der Spreizhülse und andererseits die Betätigung der Ankerhülse, die hierdurch entgegengesetzt expandiert und sich insbesondere mit ihrer nach hinten gerichteten Kante an der Bohrlochwand verankert. Durch diesen Mechanismus können die Montierbarkeit und die Lastwerte in einfacher Weise noch weiter verbessert werden.

Eine bevorzugte Ausgestaltung der Erfindung liegt darin, dass die Spreizhülse an ihrem vorderen Ende einen Keil für die Ankerhülse bildet. Hierdurch kann die Expansion der Ankerhülse in konstruktiv besonders einfacher Weise besonders präzise kontrolliert werde. Insbesondere kann vorgesehen sein, dass sich die Spreizhülse an einer aussenseitigen Schräge nach vorne hin verjüngt und hierdurch den Keil zumindest teilweise bildet. Der Keil für die Ankerhülse kann gegen die Ankerhülse wirken. Insbesondere kann der Keil dazu dienen, die Ankerhülse radial nach aussen zu drängen, wenn die Ankerhülse axial gegen den Keil läuft.

Der Ankerhülsenmitnehmer könnte beispielsweise ein Stift sein, der in eine Ausnehmung in der Ankerhülse hineinragt. Besonders bevorzugt ist es aber, dass der Ankerhülsenmitnehmer eine, insbesondere im Längsschnitt des Ankerbolzens ausgebildete, Anschlagschulter ist. Dies kann bei besonders geringem Fertigungsaufwand eine besonders gute Kraftübertragung auf die Ankerhülse ermöglichen. Insbesondere kann die Anschlagschulter den Ankerbolzen und/oder dessen Längsachse ringförmig umlaufen. Vorzugsweise ist die Anschlagschulter nach vorne versetzt zur Ankerhülse angeordnet, was im Hinblick auf den konstruktiven Aufwand vorteilhaft sein kann.

Vorzugsweise weist der Ankerbolzen einen Ankerhülsenanschlag auf, der eine nach hinten gerichtete Verschiebung der Ankerhülse am Ankerbolzen blockiert. Der Ankerhülsenanschlag verhindert also, dass die Ankerhülse über eine vorher bestimmte Position hinaus am Ankerbolzen nach hinten versetzt wird. Hierdurch kann einer die Montage erschwerenden vorzeitigen Verankerung der Ankerhülse während der Montage des Spreizankers, insbesondere aufgrund von vorzeitigem Auflaufen der Ankerhülse auf die Spreizhülse bei Reibung der Ankerhülse an der Bohrlochwand, in besonders einfacher und zuverlässiger Weise entgegengewirkt werden. Besonders bevorzugt ist es, dass der Ankerhülsenanschlag eine, insbesondere im Längsschnitt des Ankerbolzens ausgebildete, Anschlagschulter ist. Dies kann unter anderem im Hinblick auf den Fertigungsaufwand vorteilhaft sein. Insbesondere kann die Anschlagschulter den Ankerbolzen und/oder dessen Längsachse ringförmig umlaufen. Vorzugsweise ist die Anschlagschulter auf Höhe der Ankerhülse angeordnet, das heisst die Anschlagschulter überlagert sich axial mit der Ankerhülse, was im Hinblick auf den konstruktiven Aufwand vorteilhaft sein kann.

Besonders bevorzugt ist es, dass der Ankerbolzen eine Nut, vorzugsweise eine ringförmige Nut, aufweist, in welcher die Ankerhülse teilweise aufgenommen ist, wobei der Ankerhülsenanschlag an der Nut gebildet ist und/oder wobei der Ankerhülsenmitnehmer an der Nut gebildet ist. Dies kann eine besonders einfache Konstruktion ermöglichen. Insbesondere kann die Nut den Ankerbolzen und/oder dessen Längsachse ringförmig umlaufen. Der Ankerhülsenanschlag kann an einer hinteren Flanke der Nut und der Ankerhülsenmitnehmer an einer vorderen Flanke der Nut gebildet sein. Zweckmässigerweise weist die Ankerhülse einen radial nach innen weisenden Ansatz auf, der in der Nut aufgenommen ist. Insbesondere kann die Ankerhülse spielfrei in der Nut teilweise aufgenommen sein.

Vorzugsweise ist die Ankerhülse axial kürzer als die Spreizhülse, was insbesondere beinhalten kann, dass die maximale axiale Erstreckung der Ankerhülse kleiner als die maximale axiale Erstreckung der Spreizhülse ist. Dies kann im Hinblick auf den konstruktiven Aufwand und den Materialaufwand vorteilhaft sein. Insbesondere kann hierbei berücksichtig werden, dass die Ankerhülse steiler als die Spreizhülse expandieren kann. Vorzugsweise ist die Spreizhülse mindestens doppelt so lang wie die Ankerhülse, das heisst die maximale axiale Erstreckung der Spreizhülse beträgt mindestens das Doppelte der maximalen axialen Erstreckung der Ankerhülse.

Besonders bevorzugt ist es, dass der Ankerbolzen einen Spreizhülsenmitnehmer aufweist, der die Spreizhülse, insbesondere bei der Montage des Spreizankers, nach vorne hin mitnehmen kann. Hierdurch kann unter anderem der Materialaufwand, insbesondere für die Spreizhülse, noch weiter reduziert werden. Der Spreizhülsenmitnehmer kann an der Spreizhülse, insbesondere von hinten, angreifen und die Spreizhülse nach vorne mitnehmen, wenn der Ankerbolzen nach vorne versetzt wird. Besonders bevorzugt ist es, dass der Spreizhülsenmitnehmer eine, insbesondere im Längsschnitt des Ankerbolzens ausgebildete, Anschlagschulter ist. Dies kann unter anderem im Hinblick auf den Fertigungsaufwand vorteilhaft sein. Insbesondere kann die Anschlagschulter den Ankerbolzen und/oder dessen Längsachse ringförmig umlaufen. Vorzugsweise ist die Anschlagschulter nach hinten versetzt zur Ankerhülse angeordnet, was im Hinblick auf den konstruktiven Aufwand vorteilhaft sein kann.

Die Erfindung betrifft auch die bestimmungsgemässe Verwendung des Spreizankers, insbesondere die bestimmungsgemässe Montage des Spreizankers. Insbesondere betrifft die Erfindung eine Verwendung eines erfindungsgemässen Spreizankers, bei welcher der Ankerbolzen relativ zur Spreizhülse nach hinten versetzt wird und die vom Ankerhülsenmitnehmer mitgenommene Ankerhülse von der Spreizhülse radial nach aussen gedrängt wird. Besonders bevorzugt wird bei der Verwendung der Ankerbolzen so weit relativ zur Spreizhülse nach hinten versetzt, bis die vom Ankerhülsenmitnehmer mitgenommene Ankerhülse gegen die Spreizhülse läuft und von der Spreizhülse radial nach aussen gedrängt wird.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Seitenansicht einer Ausführungsform eines erfindungsgemässen Spreizankers vor dessen Montage;
- Figur 2:: eine Seitenansicht des Ankerbolzens des Spreizankers aus Figur 1 ohne Hülsen;
- Figur 3:: eine Seitenansicht der Spreizhülse und der Ankerhülse des Spreizankers aus Figur 1 vor der Montage des Spreizankers;
- Figur 4:: eine Längsschnittansicht des Spreizankers aus Figur 1 vor dessen Montage; und
- Figur 5:: eine Längsschnittansicht des Spreizankers aus Figur 1 in einem vorderen Bereich des Spreizankers nach dessen Montage, das heisst nach dem radialen Aufweiten der Spreizhülse und der Ankerhülse.

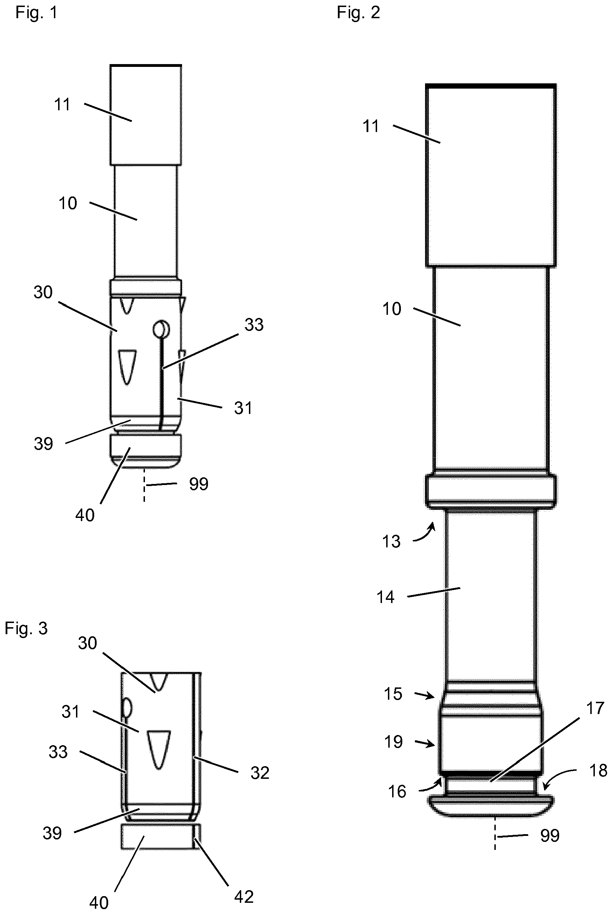

Die Figuren 1 bis 5 zeigen ein Ausführungsbeispiel eines erfindungsgemässen Spreizankers. Der Spreizanker weist einen Ankerbolzen 10 mit einer Längsachse 99, eine Spreizhülse 30 und vor der Spreizhülse 30 eine Ankerhülse 40 auf, wobei die Spreizhülse 30 und die Ankerhülse 40 jeweils den Ankerbolzen 10 ringförmig umgeben.

Der Ankerbolzen 10 weist im Bereich seines vorderen Endes einen Halsbereich 14 mit zumindest annähernd konstantem Querschnitt auf. Im Halsbereich 14 ist der Querschnitt des Ankerbolzens 10 vorzugsweise minimal. Vor dem Halsbereich 14 weist der Ankerbolzen 10 im Anschluss an den Halsbereich 14 einen Spreizbereich 15 für die Spreizhülse 30 auf. Am Spreizbereich 15 weitet sich der Ankerbolzen 10 an seiner äusseren Mantelfäche ausgehend vom Halsbereich 14 nach vorne hin auf, das heisst der Spreizbereich 15 konvergiert an seiner Aussenoberfläche nach hinten hin. Vor dem Spreizbereich 15 weist der Ankerbolzen 10 im Anschluss an den Spreizbereich 15 einen Übergangsbereich 19 auf, in welchem der Ankerbolzen 10 abermals einen zumindest annähernd konstanten Querschnitt aufweist.

Vor dem Übergangsbereich 19 ist im Ankerbolzen 10 eine radial nach innen zur Längsachse 99 weisende Nut 17 gebildet, welche die Längsachse 99 ringförmig umläuft. An der rückwärtigen Flanke der Nut 17 ist eine die Längsachse 99 ringförmig umlaufende Anschlagschulter gebildet, welche nach vorne weist und einen rückwärtigen Ankerhülsenanschlag 16 bildet. An der vorderen Flanke der Nut 17 ist eine weitere die Längsachse 99 ringförmig umlaufende Anschlagschulter gebildet, welche nach hinten weist und einen Ankerhülsenmitnehmer 18 bildet.

Am rückwärtigen Ende des Halsbereichs 14 ist eine weitere die Längsachse 99 ringförmig umlaufende Anschlagschulter gebildet, welche nach vorne weist und einen Spreizhülsenmitnehmer 13 bildet.

Vorzugsweise verlaufen der Spreizhülsenmitnehmer 13, der Ankerhülsenmitnehmer 18 und/oder der rückwärtige Ankerhülsenanschlag 16 zumindest bereichsweise zumindest annähernd rechtwinklig zur Längsachse 99. Am Ankerhülsenmitnehmer 18 ist ein T-förmiger Abschluss des Ankerbolzens 10 gebildet. Der Ankerhülsenmitnehmer 18 hat eine grössere radiale Tiefe als der rückwärtige Ankerhülsenanschlag 16 und der Ankerhülsenmitnehmer 18 steht radial weiter nach aussen vor als der rückwärtige Ankerhülsenanschlag 16.

An seinem rückwärtigen Endbereich weist der Ankerbolzen 10 eine, hier beispielsweise als Aussengewinde dargestellte, Lastangriffsstruktur 11 zum Einleiten von Zugkräften in den Ankerbolzen 10 auf. Auf diesem Aussengewinde kann eine nicht dargestellte Mutter mit korrespondierendem Innengewinde angeordnet sein.

Der Ankerbolzen 10 ist hier beispielhaft einteilig ausgeführt. Er kann aber grundsätzlich auch mehrteilig ausgeführt sein. Beispielsweise kann ein vorderer Teil des Ankerbolzens 10 mit dem Spreizbereich 15 mit einem rückwärtigen stangenförmigen Teil des Ankerbolzens 10 verschraubt sein.

Die Ankerhülse 40 ist axial deutlich kürzer als die Spreizhülse 30 ausgeführt. Insbesondere beträgt die Länge der Ankerhülse 40 weniger als die Hälfte der Länge der Spreizhülse 30. Die Ankerhülse 40 weist einen axial durchgehenden Schlitz 42 auf, das heisst die Ankerhülse 40 bildet einen offenen Ring. Ebenso weist die Spreizhülse 30 einen axial durchgehenden Schlitz 32 auf, das heisst auch die Spreizhülse 30 bildet einen offenen Ring. Die Spreizhülse 30 weist ferner weitere Schlitze 33 auf, welche sich ausgehend von der Vorderseite der Spreizhülse 30 axial nach hinten in die Spreizhülse 30 erstrecken, in der Spreizhülse 30 enden und Spreizlappen 31 der Spreizhülse 30 voneinander trennen.

Die Ankerhülse 40 ist auf Höhe der Nut 17 und auf Höhe des Übergangsbereichs 19 am Ankerbolzen 10 angeordnet. Die Ankerhülse 40 weist einen radial nach innen weisenden ringförmigen Ansatz 47 auf, der, vorzugsweise zumindest annähernd spielfrei, in die Nut 17 im Ankerbolzen 10 ragt. Aufgrund dieser Anordnung können der Ankerhülsenmitnehmer 18 und der rückwärtige Ankerhülsenanschlag 16 axial an der Ankerhülse 40, insbesondere an deren Ansatz 47, angreifen, so dass der Ankerhülsenmitnehmer 18 die Ankerhülse 40 nach hinten hin mitnehmen kann und der rückwärtige Ankerhülsenanschlag 16 eine Verschiebung der Ankerhülse 40 relativ zum Ankerbolzen 10 nach hinten begrenzen kann. Am vorderen Ende der Ankerhülse 40 schliesst die Ankerhülse 40 bündig mit ihrem Ansatz 47 ab. An ihrem hinteren Endbereich ragt die Ankerhülse 40 ein Stück weit nach hinten über den Ansatz 47 hinaus. Der Ankerhülsenmitnehmer 18 ist axial vor der Ankerhülse 40 angeordnet, wohingegen sich der rückwärtige Ankerhülsenanschlag 16 und die Ankerhülse 40 axial überlagern.

Die Spreizhülse 30 ist auf Höhe des Halsbereichs 14 und vorzugsweise wie hier dargestellt auch auf Höhe des Spreizbereichs 15 und des Übergangsbereichs 19 am Ankerbolzen 10 angeordnet. Die Spreizhülse 30 verjüngt sich nach vorne hin, vorzugsweise zumindest unter anderem an einer radial aussenliegenden Schräge, und bildet damit einen Keil 39 für die der Spreizhülse 30 vorgelagerte Ankerhülse 40. Das hintere Ende der Spreizhülse 30 ist dem Spreizhülsenmitnehmer 13 vorgelagert und liegt vorzugsweise am Spreizhülsenmitnehmer 13 an.

Beim Montieren des Spreizankers wird der Ankerbolzen 10 mit seinem vorderen Ende voran in Richtung der Längsachse 99 des Ankerbolzens 10 in ein Bohrloch geschoben. Aufgrund des Spreizhülsenmitnehmers 13, der eine Verschiebung der Spreizhülse 30 zum hinteren Ende des Ankerbolzens 10 blockiert, wird dabei auch die Spreizhülse 30 in das Bohrloch mitgenommen. Der an der Ankerhülse 40 angreifende rückwärtige Ankerhülsenanschlag 16 verhindert, dass hierbei die Ankerhülse 40 relativ zum Ankerbolzen 10 nach hinten rutscht.

Sodann wird der Ankerbolzen 10, beispielsweise durch Anziehen einer Mutter, die auf der als Aussengewinde ausgebildeten Lastangriffsstruktur 11 angeordnet ist, wieder ein Stück weit aus dem Bohrloch herausgezogen. Die Ankerhülse 40 wird dabei vom Ankerhülsenmitnehmer 18 des Ankerbolzens 10 nach hinten mitgenommen. Die Spreizhülse 30 hingegen bleibt aufgrund ihrer Reibung mit der Bohrlochwand zurück und es kommt infolgedessen zu einer axialen Verschiebung des Ankerbolzens 10 mitsamt der Ankerhülse 40 relativ zur Spreizhülse 30 nach hinten. Im Verlauf dieser Verschiebung läuft zunächst die Spreizhülse 30 weiter auf den Spreizbereich 15 auf und wird vom Spreizbereich 15 radial gegen die Bohrlochwand nach aussen gedrängt, was eine initiale Verankerung des Spreizankers bewirkt. Zugleich kann sich vorzugsweise die nach hinten laufende Ankerhülse 40 widerhakenartig an der Bohrlochwand verhaken, was eine zusätzliche initiale Verankerung bewirken kann.

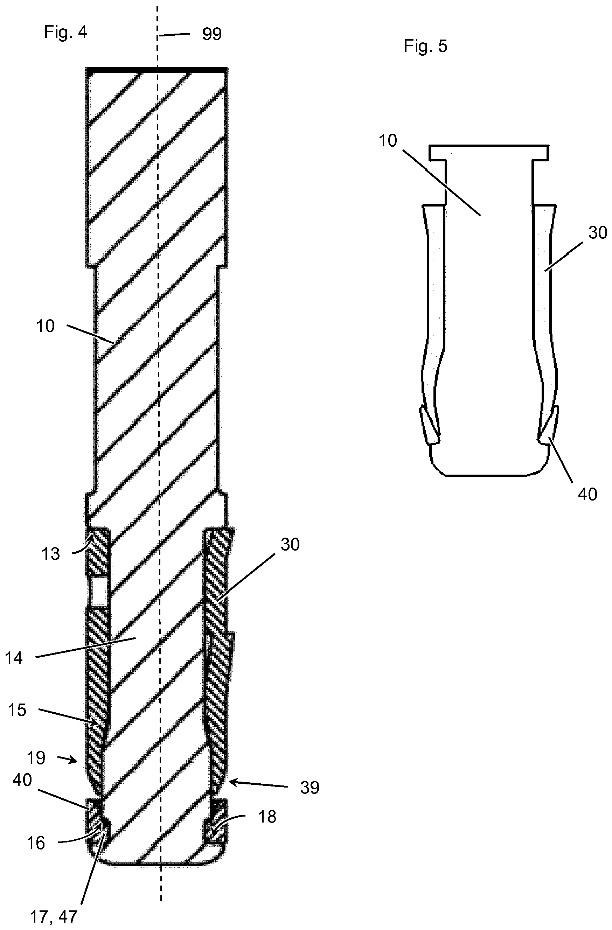

Bei fortschreitender axialer Verschiebung des Ankerbolzens 10 mitsamt der Ankerhülse 40 relativ zur Spreizhülse 30 nach hinten stösst die Ankerhülse 40 an ihrem rückwärtigen Endbereich gegen den vorderen Endbereich der Spreizhülse 30, insbesondere gegen den Keil 39 der Spreizhülse 30, und im weiteren Verlauf der Verschiebung wird die Spreizhülse 30 mit ihrem vorderen Endbereich, insbesondere mit ihrem Keil 39, radial unter die Ankerhülse 40 gedrängt, wodurch die Ankerhülse 40 radial nach aussen gegen die Bohrlochwand gedrängt wird und dort, insbesondere unter Bildung eines Hinterschnitts, verankert wird. Der resultierende Zustand nach der Montage ist schematisch in Figur 5 dargestellt.

Der Ankerbolzen 10 hat also eine ausgeprägte vordere Kante, welche einen Ankerhülsenmitnehmer 18 bildet, welcher bei axialer Verschiebung des Ankerbolzens 10 in Auszugsrichtung die Ankerhülse 40 anfänglich gegen und später über die Spreizhülse 30 verschiebt. Bei der Montage expandiert sowohl die Spreizhülse 30, nämlich durch Verschiebung des Spreizbereichs 15, als auch die Ankerhülse 40, die über die Spreizhülse 30 gezogen wird. Die radiale Expansion der relativ kleinen Ankerhülse 40 zur Hinterschnitterzeugung wird durch die Verschiebung des Ankerbolzens 10 relativ zur Spreizhülse 30 erzeugt.

## Patentansprüche

1. Spreizanker mit einem Ankerbolzen (10) und einer Spreizhülse (30), welche den Ankerbolzen (10) umgibt, wobei der Ankerbolzen (10) einen nach hinten hin konvergierenden Spreizbereich (15) für die Spreizhülse (30) aufweist,
**gekennzeichnet durch**
zumindest eine Ankerhülse (40), welche den Ankerbolzen (10) umgibt,
wobei der Ankerbolzen (10) einen Ankerhülsenmitnehmer (18) aufweist, der die Ankerhülse (40) nach hinten hin mitnehmen kann.

2. Spreizanker nach Anspruch 1,
**dadurch gekennzeichnet,**
**dass** die Ankerhülse (40) zumindest bereichsweise vor der Spreizhülse (30) angeordnet ist.

3. Spreizanker nach einem der vorstehenden Ansprüche,
**dadurch gekennzeichnet,**
**dass** die Spreizhülse (30) die Ankerhülse (40) radial nach aussen drängen kann.

4. Spreizanker nach einem der vorstehenden Ansprüche,
**dadurch gekennzeichnet,**
**dass** die Spreizhülse (30) an ihrem vorderen Ende einen Keil (39) für die Ankerhülse (40) bildet.

5. Spreizanker nach einem der vorstehenden Ansprüche,
**dadurch gekennzeichnet,**
**dass** der Ankerhülsenmitnehmer (18) eine Anschlagschulter ist.

6. Spreizanker nach einem der vorstehenden Ansprüche,
**dadurch gekennzeichnet,**
**dass** der Ankerbolzen (10) einen Ankerhülsenanschlag (16) aufweist, der eine nach hinten gerichtete Verschiebung der Ankerhülse (40) am Ankerbolzen (10) blockiert.

7. Spreizanker nach Anspruch 6,
**dadurch gekennzeichnet,**
**dass** der Ankerbolzen (10) eine Nut (17) aufweist, in welcher die Ankerhülse (40) teilweise aufgenommen ist, wobei der Ankerhülsenanschlag (16) an der Nut (17) gebildet ist.

8. Spreizanker nach einem der vorstehenden Ansprüche,
**dadurch gekennzeichnet,**
**dass** die Ankerhülse (40) axial kürzer als die Spreizhülse (30) ist.

9. Spreizanker nach einem der vorstehenden Ansprüche,
**dadurch gekennzeichnet,**
**dass** der Ankerbolzen (10) einen Spreizhülsenmitnehmer (13) aufweist, der die Spreizhülse (30) nach vorne hin mitnehmen kann.

10. Verwendung eines Spreizankers nach einem der vorstehenden Ansprüche, bei welcher der Ankerbolzen (10) relativ zur Spreizhülse (30) nach hinten versetzt wird und die vom Ankerhülsenmitnehmer (18) mitgenommene Ankerhülse (40) von der Spreizhülse (30) radial nach aussen gedrängt wird.
